# EUROPÄISCHE PATENTANMELDUNG

(11) **EP 1 367 022 A2**
(43) Veröffentlichungstag der Anmeldung: **03.12.2003**
(21) Anmeldenummer: 03011253.6
(22) Anmeldetag: 16.05.2003
(51) Int. Cl.: B66C 13/46, G06K 7/10, B65G 63/00

(54) **Vorrichtung zur Verifizierung von Containernummern beim Ent- und Beladen von Schiffen mit Containerkranen in Containerterminals**

(30) Priorität: 31.05.2002 DE 10224313
(71) Anmelder: SIEMENS AKTIENGESELLSCHAFT, 80333 München (DE)
(72) Erfinder: Holland, Maarten, 91099 Poxdorf (DE); Wichner, Wolfgang, 90530 Wendelstein (DE)

(57) **Zusammenfassung**

Vorrichtung zur Verifizierung von Containernummern beim Entund Beladen von Schiffen mit Containerkranen in Containerterminals

Eine Vorrichtung zur Verifizierung von Containernummern beim Ent- und Beladen von Schiffen mit Containerkranen in Containerterminals wird zur Ermöglichung eines automatischen Erfassens und Verifizierens von Containern mit einem Kamerasystem (12), das am Containerkran (1) installiert und mittels dem eine an den rechten oberen Ecken der Containerseitenwände aufgedruckte Containernummer optisch erfassbar ist, und einem Bildauswertesystem (14) ausgerüstet, mittels dem die durch das Kamerasystem (12) erfaßte Containernummer identifizierbar ist und im Zusammenwirken mit einem Verwaltungsrechner des Containerterminals mit einer in letzterem abgespeicherten Containernummer vergleichbar ist.

## Beschreibung

Die Erfindung bezieht sich auf eine Vorrichtung zur Verifizierung von Containernummern beim Ent- und Beladen von Schiffen mit Containerkranen in Containerterminals.

Während des Entladens und Beladens von Schiffen mittels Containerkranen ist es erforderlich, die Nummer jedes umgeschlagenen Containers zu erfassen, um sicherzustellen, dass jeder Container auf dem ihm zugedachten Platz im Stapelplatz des Containerterminals bzw. auf dem Schiff gelangt.

Hierzu müssen die Containernummern von auf dem Schiff befindlichen Decksleuten oder vom Kranführer selbst abgelesen und in Listen eingetragen oder in tragbare elektronische Erfassungsgeräte eingetippt werden. Aufgrund dieser Arbeitsvorgänge entsteht zum einen Personal- und Zeitaufwand, wobei darüber hinaus Fehler beim Erfassen und beim späteren Vergleichen mit den Ladelisten nicht ausgeschlossen werden können.

Daher wurden zwischenzeitlich Erfassungssysteme entwickelt, bei denen die Erkennung der Container mittels einer zusätzlichen Identifikationseinrichtung realisiert wird, wobei diese Identifikationseinrichtung maschinell lesbar ausgestaltet ist. Nachteilig an diesen Erfassungssystemen ist, dass hierfür Millionen von Containern weltweit mit entsprechenden Identifikationseinrichtungen versehen werden müßten.

Der Erfindung liegt die Aufgabe zugrunde, eine Vorrichtung und ein Verfahren zur Verifizierung von Containernummern beim Ent- und Beladen von Schiffen mit Containerkranen in Containerterminals zu schaffen, mittels der bzw. dem ein automatisches Erfassen und Verifizieren der auf allen Containern bereits heute vorhandenen Containernummern möglich ist, ohne dass Modifizierungen an den Containern selbst vorgenommen werden müßten.

Diese Aufgabe wird erfindungsgemäß durch eine Vorrichtung zur Verifizierung von Containernummern beim Ent- und Beladen von Schiffen mit Containerkranen in Containerterminals gelöst, zu der ein Kamerasystem, das am Containerkran installiert und mittels dem eine an den rechten oberen Ecken der Containerseitenwände aufgedruckte Containernummer optisch erfassbar ist, und ein Bildauswertesystem gehören, mittels dem die durch das Kamerasystem erfaßte Containernummer identifizierbar ist und im Zusammenwirken mit einem Verwaltungsrechner des Containerterminals mit einer in letzterem abgespeicherten Containernummer vergleichbar ist. Durch die vorstehend geschilderte Erfassungsmethode werden jedwede Verzögerungen im Umschlagsbetrieb vermieden, da die Ablesung der Containernummer während des ohnehin erforderlichen Bewegungsvorganges erfolgt.

Vorteilhaft ist das Bildauswertesystem in das Kamerasystem integriert. Eine derartige Integration ist jedoch nicht zwingend notwendig, solange bzw. soweit gewährleistet ist, dass das Bildauswertesystem in geeigneter Weise an das Kamerasystem angeschlossen ist.

Zur optimalen Anordnung des Kamerasystems am Containerkran unter Berücksichtigung der Tatsache, dass die Containernummern in der rechten oberen Ecke der Containerseitenwände vorgesehen sind, befindet sich das Kamerasystem zweckmäßigerweise in halber Höhe des Containerkrans, und zwar auf der rechten Seite desselben etwa mittig zwischen einem landseitigen und einem wasserseitigen Kranbein.

Zur exakten Ausrichtung des Kamerasystems auf die optisch zu erfassende Containernummer ist es vorteilhaft, wenn das Kamerasystem eine motorgetriebene Schwenkvorrichtung aufweist, mittels der vertikale und horizontale Schwenkbewegungen des Kamerasystems realisierbar sind.

Eine Fokussierung der Linseneinheit des Kamerasystems auf die Containernummer wird vorteilhaft durch eine motorgetriebene Zoomvorrichtung realisiert.

Eine Erfassung der Containernummer in ausreichender Größe und mit ausreichender Schärfe wird in jedem Fall bewerkstelligt, wenn das Kamerasystem an eine Kransteuerung angeschlossen ist, zu der eine Hubhöhenerfassung eines Lastaufnahmemittels des Containerkrans, eine Positionserfassung einer Laufkatze des Containerkrans und ggf. eine Pendelregelungseinrichtung, mittels der eine Vermessung bzw. Erfassung des Pendelwinkels des am Lastaufnahmemittel aufgenommenen Containers realisierbar ist, gehören, so dass das Kamerasystem mittels seiner Schwenkvorrichtung und seiner Zoomvorrichtung unter Berücksichtigung von von der Kransteuerung zum Kamerasystem weitergeleiteten Positionsdaten des am Lastaufnahmemittel des Containerkrans befindlichen Containers auf die rechte obere Ecke der Containerseitenwand ausricht- und fokussierbar ist.

Zur Eliminierung von Tageslichteinflüssen weist das Kamerasystem zweckmäßigerweise einen Blitzscheinwerfer auf, der mittels der motorgetriebenen Schwenkvorrichtung des Kamerasystems mit letzterem auf die rechte obere Ecke der Containerseitenwand und damit auf die Containernummer ausrichtbar ist und der einen engen Abstrahlwinkel aufweist. Hierdurch ist es möglich, zeitlich unmittelbar hintereinander zwei Aufnahmen zu erstellen, eine mit und eine ohne Blitz. Durch eine Differenzbildauswertung können dann die Tageslichteinflüsse ausgeschlossen werden. Bei einem erfindungsgemäßen Verfahren zur Verifizierung von Containernummern beim Ent- und Beladen von Schiffen mit Containerkranen in Containerterminals werden an den rechten oberen Ecken von Containerseitenwänden aufgedruckte Containernummern mittels eines Kamerasystems optisch erfaßt, mittels eines Bildauswertesystems identifiziert und mit in einem Verwaltungsrechner des Containerterminals abgespeicherten Containernummern verglichen.

Zur genauen Erfassung der Containernummern wird das Kamerasystem unter Berücksichtigung von in einer Kransteuerung des Containerkrans erfaßten Positionsdaten des an einem Lastaufnahmemittel des Containerkrans befindlichen Containers auf die rechte obere Ecke der Containerseitenwand ausgerichtet und fokussiert.

Die vom Bildauswertesystem identifizierte Containernummer kann an den Verwaltungsrechner des Containerterminals übermittelt und im Verwaltungsrechner mit der erwarteten vorgegebenen Containernummer verglichen werden.

Alternativ ist es möglich, die erwartete vorgegebene Containernummer vom Verwaltungsrechner des Containerterminals an das Bildauswertesystem zu übermitteln und im Bildauswertesystem mit der von diesem identifizierten Containernummer zu vergleichen.

Die Elimination von Tageslichteinflüssen wird erzielt, indem eine erste Aufnahme der Containernummer mit oder ohne Blitz und unmittelbar danach eine zweite Aufnahme der Containernummer ohne bzw. mit Blitz aufgenommen wird, wobei die Grauwerte der beiden Aufnahmen elektronisch voneinander subtrahiert werden. Hierdurch wird eine tageslichtunabhängige Aufnahmequalität erreicht.

Im folgenden wird die Erfindung anhand einer Ausführungsform unter Bezugnahme auf die Zeichnung näher erläutert.

Es zeigen:
- FIG 1: eine Seitenansicht eines mit einer erfindungsgemäßen Vorrichtung zur Verifizierung von Containernummern ausgerüsteten Containerkrans in Prinzipdarstellung; und
- FIG 2: eine landseitige Ansicht des in Figur 1 gezeigten Containerkrans in Prinzipdarstellung.

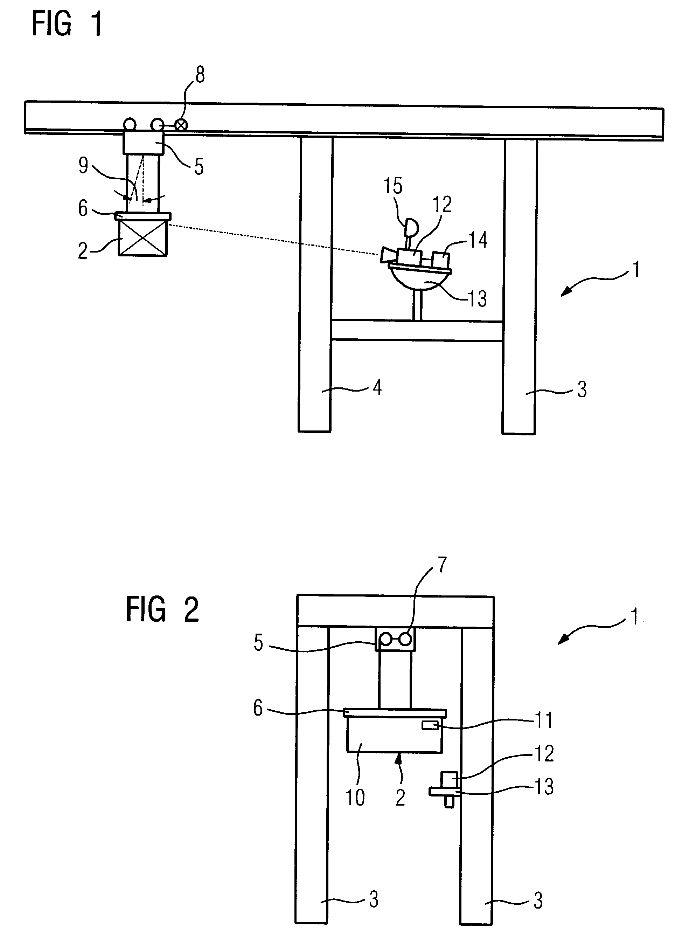

Ein in Figur 1 in Seitenansicht gezeigter Containerkran 1 ist ein funktioneller Bestandteil eines im übrigen nicht gezeigten Containerterminals, wobei mittels des Containerkrans 1 Container 2 auf im Containerterminal befindliche, in den Figuren nicht dargestellte Schiffe geladen werden bzw. von den Schiffen entladen und in das Containerterminal geladen werden.

Der Containerkran 1 hat landseitige Kranbeine 3 und wasserseitige Kranbeine 4.

Am Containerkran 1 ist eine Laufkatze 5 verfahrbar, an der - in Vertikalrichtung verstellbar - ein Lastaufnahmemittel (Spreader) 6 gehaltert ist. Mittels einer Hubhöhenerfassung 7 ist die vertikale Position des Lastaufnahmemittels 6 und damit des an diesem befindlichen Containers 2 in Bezug auf die Laufkatze 5 bzw. den Containerkran 1 erfassbar. Des weiteren ist am Containerkran 1 eine Positionserfassung 8 vorgesehen, mittels der die Position der Laufkatze 5 in Bezug auf den Containerkran 1 vermessen bzw. erfaßt werden kann.

Bei dem in den Figuren 1 und 2 gezeigten Containerkran 1 ist des weiteren ein in den Figuren nicht näher gezeigtes Pendelregelungssystem vorgesehen, mittels dem eine Vermessung bzw. Erfassung eines Pendelwinkels 9 möglich ist, mit dem das Lastaufnahmemittel 6 und der an ihm befindliche Container 2 in Bezug auf die Laufkatze 5 pendeln.

Durch das in den Figuren nicht dargestellte Pendelregelungssystem, die Positionserfassung 8 für die Laufkatze 5 und die Hubhöhenerfassung 7 für das Lastaufnahmemittel 6 werden kontinuierlich die räumliche Position des Lastaufnahmemittels 6 bzw. des an ihm befindlichen Containers 2 betreffende Daten an eine in den Figuren nicht gezeigte Kransteuerung weitergeleitet. In der Kransteuerung liegen des weiteren Informationen darüber vor, ob es sich bei dem am Lastaufnahmemittel 6 des Containerkrans 1 befindlichen Container 2 um einen 20-Fuß, 40-Fuß oder 45-Fuß langen Container 2 handelt, oder ob im sogenannten Twin-Betrieb gleichzeitig zwei 20-Fuß lange Container 2 am Lastaufnahmemittel 6 vorhanden sind.

Jeder heute übliche Container 2 trägt auf seinen Containerseitenwänden 10 eine in deren oberer rechter Ecke aufgedruckte Containernummer 11. Jedem Container 2 ist eine unterschiedliche Containernummer 11 zugeordnet, die, wie bereits erwähnt, auf den beiden Containerseitenwänden 10 des Containers jeweils in der oberen rechten Ecke aufgedruckt ist.

Zur Erfassung der Containernummer 11 des am Lastaufnahmemittel 6 des Containerkrans 1 befindlichen Containers 2 weist der Containerkran 1 ein Kamerasystem 12 auf. Sofern sich am Lastaufnahmemittel 6 des Containerkrans 1 zwei 20-Fuß lange Container 2 befinden, muß das Kamerasystem 12 die beiden Containernummern 11 nacheinander ablesen. Das Kamerasystem 12 ist bei dem anhand der Figuren 1 und 2 prinzipiell dargestellten Ausführungsbeispiel etwa in halber Höhe der Kranbeine 3, 4 des Containerkrans 1 angeordnet, und zwar im Bereich des rechten landseitigen Kranbeins 3 und des rechten wasserseitigen Kranbeins 4 des Containerkrans etwa mittig zwischen diesen beiden; die Blickrichtung ist hierbei die Richtung zur Wasserseite bzw. zu dem im Containerterminal befindlichen Schiff.

Die Anordnung des Kamerasystems 12 rechtsseitig des Containerkrans 1 wird deshalb gewählt, da die Containernummern 11 in den oberen rechten Ecken der Containerseitenwände 10 des Containers 2 vorgesehen sind.

Zu dem Kamerasystem 12 gehört eine motorgetriebene Schwenkvorrichtung 13, mittels der Schwenks des Kamerasystems 12 in vertikaler und horizontaler Richtung realisierbar sind. Darüber hinaus hat das Kamerasystem 12 eine ebenfalls motorgetriebene in den Figuren nicht dargestellte Zoomeinrichtung.

Das Kamerasystem 12 ist mit der in den Figuren nicht dargestellten Kransteuerung des Containerkrans 1 verbunden, so dass kontinuierlich die räumliche Position des am Lastaufnahmemittel 6 des Containerkrans 1 befindlichen Containers 2 betreffende Daten im Kamerasystem 12 vorliegen. Entsprechend den vorliegenden Positionsdaten des Containers 2 wird das Kamerasystem 12 mittels seiner Schwenkvorrichtung 13 und seiner Zoomvorrichtung so auf die rechte obere Ecke der Containerseitenwand 10 ausgerichtet, dass mittels des Kamerasystems 12 die Containernummer 11 in ausreichender Größe und mit ausreichender Schärfe erfaßt wird.

Zu dem Kamerasystem 12 gehört auch ein Bildauswertesystem 14, mittels dem die durch das Kamerasystem 12 erfaßte Containernummer 11 identifizierbar ist. Die im Bildauswertesystem 14 identifizierte Containernummer 11 wird einem Verwaltungsrechner des Containerterminals bzw. dem Hafenleitrechner übermittelt. Dieser Rechner prüft dann, ob die Containernummer des erwarteten Containers mit der Containernummer 11 des am Lastaufnahmemittel 6 des Containerkrans 1 befindlichen Containers 2 übereinstimmt.

Umgekehrt ist es auch möglich, dass der Verwaltungsrechner des Containerterminals bzw. der Hafenleitrechner an das Bildauswertesystem 14 die Containernummer des erwarteten Containers übermittelt, wobei eine Verifizierung derselben dann im Bildauswertesystem 14 stattfindet.

Bei der in den Figuren gezeigten Ausführungsform des Kamerasystems 12 ist dieses mit einem eigenen Blitzscheinwerfer 15 ausgerüstet. Der Blitzscheinwerfer 15 hat einen engen Abstrahlwinkel, der gemeinsam mit dem Kamerasystem 12 mittels der Schwenkvorrichtung 13 auf die in der oberen rechten Ecke der Containerseitenwand 10 befindliche Containernummer 11 des Containers 2 ausgerichtet wird. Die Blitzabstrahlung des Blitzscheinwerfers 15 wird mit einem Shutter des Kamerasystems 12 synchronisiert. Bei der Erfassung der Containernummer 11 werden dann zwei Aufnahmen unmittelbar hintereinander aufgenommen, und zwar einmal mit und einmal ohne Blitz. Zur Eliminierung von Tageslichteinflüssen wird dann eine Differenzbildauswertung vorgenommen, d.h. die Grauwerte der beiden Aufnahmen werden elektronisch voneinander subtrahiert, so dass eine tageslichtunabhängige Aufnahmequalität vorliegt.

## Patentansprüche

1. Vorrichtung zur Verifizierung von Containernummern (11) beim Ent- und Beladen von Schiffen mit Containerkranen (1) in Containerterminals, **gekennzeichnet durch** ein Kamerasystem (12), das am Containerkran (1) installiert und mittels dem eine an den rechten oberen Ecken der Containerseitenwände (10) aufgedruckte Containernummer (11) optisch erfassbar ist, und ein Bildauswertesystem (14), mittels dem die **durch** das Kamerasystem (12) erfaßte Containernummer (11) identifizierbar ist und im Zusammenwirken mit einem Verwaltungsrechner des Containerterminals mit einer in letzterem abgespeicherten Containernummer vergleichbar ist.

2. Vorrichtung nach Anspruch 1, bei der das Bildauswertesystem (14) in das Kamerasystem (12) integriert ist.

3. Vorrichtung nach Anspruch 1 oder 2, deren Kamerasystem (12) ca. in halber Höhe des Containerkrans (1) angeordnet ist.

4. Vorrichtung nach einem der Ansprüche 1 bis 3, deren Kamerasystem (12) auf der rechten Seite des Containerkrans (1) angeordnet ist.

5. Vorrichtung nach einem der Ansprüche 1 bis 4, deren Kamerasystem (12) etwa mittig zwischen einem landseitigen (3) und einem wasserseitigen Kranbein (4) des Containerkrans (1) angeordnet ist.

6. Vorrichtung nach einem der Ansprüche 1 bis 5, deren Kamerasystem (12) eine motorgetriebene Schwenkvorrichtung (13) aufweist, mittels der vertikale und horizontale Schwenkbewegungen des Kamerasystems (12) realisierbar sind.

7. Vorrichtung nach einem der Ansprüche 1 bis 6, deren Kamerasystem (12) eine motorgetriebene Zoomvorrichtung aufweist.

8. Vorrichtung nach einem der Ansprüche 1 bis 7, deren Kamerasystem (12) an eine Kransteuerung angeschlossen ist, zu der eine Hubhöhenerfassung (7) eines Lastaufnahmemittels (6) des Containerkrans (1), eine Positionserfassung (8) einer Laufkatze (5) des Containerkrans (1) und ggf. eine Pendelregelungseinrichtung, mittels der eine Vermessung bzw. Erfassung eines Pendelwinkels (9) des am Lastaufnahmemittel (6) aufgenommenen Containers (2) realisierbar ist, gehören, so dass das Kamerasystem (12) mittels seiner Schwenkvorrichtung (13) und seiner Zoomvorrichtung unter Berücksichtigung von von der Kransteuerung zum Kamerasystem (12) weitergeleiteten Positionsdaten des am Lastaufnahmemittel (6) des Containerkrans (1) befindlichen Containers (2) auf die rechte obere Ecke der Containerseitenwand (10) ausricht- und fokussierbar ist.

9. Vorrichtung nach einem der Ansprüche 1 bis 8, deren Kamerasystem (12) einen Blitzscheinwerfer (15) aufweist, der mittels der motorgetriebenen Schwenkvorrichtung (13) des Kamerasystems (12) mit letzterem auf die rechte obere Ecke der Containerseitenwand (10) und damit auf die Containernummer (11) ausrichtbar ist und der einen engen Abstrahlwinkel aufweist.

10. Verfahren zur Verifizierung von Containernummern (11) beim Ent- und Beladen von Schiffen mit Containerkranen (1) in Containerterminals, **dadurch gekennzeichnet, dass** an den rechten oberen Ecken von Containerseitenwänden (10) aufgedruckte Containernummern (11) mittels eines Kamerasystems (12) optisch erfaßt, mittels eines Bildauswertesystems (14) identifiziert und mit in einem Verwaltungsrechner des Containerterminals abgespeicherten Containernummern verglichen werden.

11. Verfahren nach Anspruch 10, bei dem das Kamerasystem (12) unter Berücksichtigung von in einer Kransteuerung des Containerkrans (1) erfaßten Positionsdaten des an einem Lastaufnahmemittel (6) des Containerkrans (1) befindlichen Containers (2) auf die rechte obere Ecke der Containerseitenwand (10) ausgerichtet und fokussiert wird.

12. Verfahren nach Anspruch 10 oder 11, bei dem die vom Bildauswertesystem (14) identifizierte Containernummer (11) an den Verwaltungsrechner des Containerterminals übermittelt und im Verwaltungsrechner mit der erwarteten vorgegebenen Containernummer verglichen wird.

13. Verfahren nach Anspruch 10 oder 11, bei dem die erwartete vorgegebene Containernummer vom Verwaltungsrechner des Containerterminals an das Bildauswertesystem (14) übermittelt und im Bildauswertesystem (14) mit der von diesem identifizierten Containernummer (11) verglichen wird.

14. Verfahren nach einem der Ansprüche 10 bis 13, bei dem eine erste Aufnahme der Containernummer (11) mit oder ohne Blitz und unmittelbar danach eine zweite Aufnahme der Containernummer (11) ohne bzw. mit Blitz aufgenommen wird, und die Grauwerte der beiden Aufnahmen elektronisch voneinander subtrahiert werden.
